# EUROPÄISCHE PATENTSCHRIFT

(11) **EP 1 926 999 B1**
(45) Veröffentlichungstag und Bekanntmachung des Hinweises auf die Patenterteilung: **08.10.2014**
(21) Anmeldenummer: 06792659.2
(22) Anmeldetag: 02.08.2006
(51) Int. Cl.: G01P 1/02, G01D 11/24, H01R 29/00, H01R 43/16, H01R 13/33, H01R 13/66, H01R 43/24

(54) **GRUNDMODUL FÜR EINEN BEWEGUNGSSENSOR**
BASE MODULE FOR A MOTION SENSOR
MODULE DE BASE POUR UN CAPTEUR DE MOUVEMENT

(30) Priorität: 13.09.2005 DE 102005043413
(43) Veröffentlichungstag der Anmeldung: 04.06.2008
(73) Patentinhaber: ROBERT BOSCH GMBH, 70442 Stuttgart (DE)
(72) Erfinder: MUELLER, Wolfgang-Michael, 71277 Rutesheim (DE); GROEGER, Jochen, Farmington Hills, 48331 (US); SIEDENTOPF, Joerg, 74199 Untergruppenbach (DE)
(86) Internationale Anmeldenummer: PCT/EP2006/064983
(87) Internationale Veröffentlichungsnummer: WO 2007/031367

(56) Entgegenhaltungen:
- DE-A1- 19 544 660
- DE-A1- 19 722 507
- US-A1- 2002 180 424

## Beschreibung

### Stand der Technik

Die Erfindung betrifft ein Grundmodul für einen Bewegungssensor, insbesondere einen Drehzahlgeber oder Phasengeber für ein Kraftfahrzeug wie er grundsätzlich aus der DE 197 22 507 A bekannt ist. Der dort beschriebene Sensor besitzt ein vorgefertigtes Gehäuseteil, in welches eine integrierte Schaltung einschließlich eines magnetoresistiven Elements und eines Permanentmagneten eingelegt und nach der Verbindung mit den Litzen eines zweiadrigen Kabels mit Kunststoff umspritzt sind. Auf diese Weise erhält man eine gegen Umwelteinflüsse resistente Anordnung, welche jedoch zu ihrer Herstellung eine größere Zahl von Arbeitsschritten benötigt und wegen der Verwendung eines vorgefertigten Gehäuses einen verhältnismäßig großen Einbauraum benötigt.

Aus der DE 10 2004 011 100 A sind ein Bewegungssensor und Verfahren zur Herstellung des Bewegungssensors bekannt. Der Sensor umfasst eine über ein elektrisches Kabel anschließbare integrierte Schaltung mit einem Messwertgeber und einer elektronischen Schaltungsanordnung zur Aufbereitung der Messsignale. Der Sensor besitzt einen durch Gießen oder Spritzgießen von thermoplastischem Kunststoff, vorzugsweise von Polyamid, in MID-Technik hergestellten Grundbaustein, in den ein Dauermagnet integriert ist. Eine gehäuselose integrierte Schaltung ist in Flip-Chip-Technik auf das MID-Bauelement aufgebracht. Die Anordnung aus dem Grundbaustein mit der integrierten Schaltung und dem Dauermagnet sowie dem Anschlussende des Kabels sind in einem weiteren Verfahrensschritt mit einem äußeren Verguss umhüllt und zu einer widerstandsfähigen und gegen Umgebungseinflüsse gut geschützten Baueinheit zusammengefügt.

Aus der DE-A-19544660 ist bereits eine Steckeranordnung für ein elektrisches Gerät bekannt. Die Steckeranordnung umfasst Steckzungen, welche Bestandteil eines Stanzgitters sind. Das Stanzgitter erstreckt sich von den Steckzungen bis zu den Anschlüssen eines Sensors, der am Ende der Steckeranordnung angebracht ist. Zwischen den Gitterbahnen und auch zur Überbrückung von Unterbrechungen der Gitterbahnen können elektrische Bauteile wie Kondensatoren, Widerstände oder Dioden aufgebracht werden.

Die Offenlegung US 2002 0180424 A1 offenbart einen Drehbewegungssensor mit einem Zwischenbauteil aus dem Anschlusspins herausragen. Elektronische Bauteile, wie beispielsweise ein Sensorelement, sind auf einem gespritzten Grundmodul angeordnet und mit den herausragenden Anschlusspins verbunden.

### Offenbarung der Erfindung

Der Erfindung liegt die Aufgabe zugrunde, ein Grundmodul für einen Bewegungssensor anzugeben, welcher einerseits einen geringeren Fertigungsaufwand verursacht und andererseits einen kleineren Einbauraum beansprucht. Dies wird erreicht durch die kennzeichnenden Merkmale des unabhängigen Anspruchs.

Hierbei hat es sich als vorteilhaft erwiesen, dass das Grundmodul zumindest ein Beschaltungsmittel umfasst, das an einer Stromschiene angeordnet ist, wobei die Stromschiene und das Beschaltungsmittel zumindest teilweise von einer Ummantelung umgeben sind. Dieses Beschaltungsmittel dient einerseits der Störungsunterdrückung als Teil eines EMV-Netzwerks, andererseits der Anpassung des Spannungsniveaus an unterschiedliche Spannungsniveaus. Dadurch dass das Beschaltungsmittel, vorzugsweise ein elektrischer Widerstand, unmittelbar an dem Stanzgitter der Stromschiene angeordnet ist, können sehr kleine Abmessungen des Grundmoduls erreicht werden. Auf eine zusätzliche Platine kann durch die erfindungsgemäße Lösung verzichtet werden. Das Grundmodul ist dank der Umspritzung von Beschaltungsmittel und Stromschiene robust gegenüber äußeren mechanischen Belastungen wie beispielsweise Schüttelbelastungen.

Erfindungsgemäß ist vorgesehen, dass der Draht des Widerstands aus Stahl besteht und mit einer Biegung, vorzugsweise größer als 90°, versehen ist. Die Biegung des Widerstands ist für eine Umspritzung beispielsweise mit Thermoplasten notwendig, wodurch die Anordnung robust gegenüber sehr großen und häufigen Temperaturwechseln wird.

In einer zweckmäßigen Weiterbildung ist vorgesehen, dass durch die Beschaltungsmittel eine Kreuzung der Stromschienen erfolgt. Dadurch kann ein möglicher Kundenwunsch einer bestimmten Steckerbelegung ohne großen Aufwand berücksichtigt werden, wenn beispielsweise die Anschlussgeometrien von integrierter Schaltung und Steckerbelegung differieren.

Bei einem Bewegungssensor mit erfindungsgemäßen Grundmodul ist vorgesehen, dass die integrierte Schaltung auf einem Trägerstreifen bzw. Leadframe angeordnet ist, der zweifach gebogen ist. Dadurch lässt sich das Grundmodul noch baukleiner, insbesondere mit geringem Durchmesser, ausführen. Denn die auf dem Trägerstreifen bzw. Leadframe angebrachten Kondensatoren nehmen einen kleineren Bauraum ein.

In einer weiteren zweckmäßigen Weiterbildung ist vorgesehen, dass die Ummantelung in nur einem Arbeitsschritt erfolgt, vorzugsweise mittels Spritzgießverfahren. Dabei handelt es sich um ein besonders kostengünstiges Herstellverfahren, da gegenüber konventionellen Herstellverfahren ein Arbeitsgang wie beispielsweise eine Kopfumspritzung oder das Ausgießen mit Duroplast eingespart werden kann.

Weitere Einzelheiten und vorteilhafte Ausgestaltungen der Erfindung ergeben sich aus den abhängigen Ansprüchen und der Beschreibung der in den Figuren dargestellten Ausführungsbeispiele. beispiele.

Es zeigen:

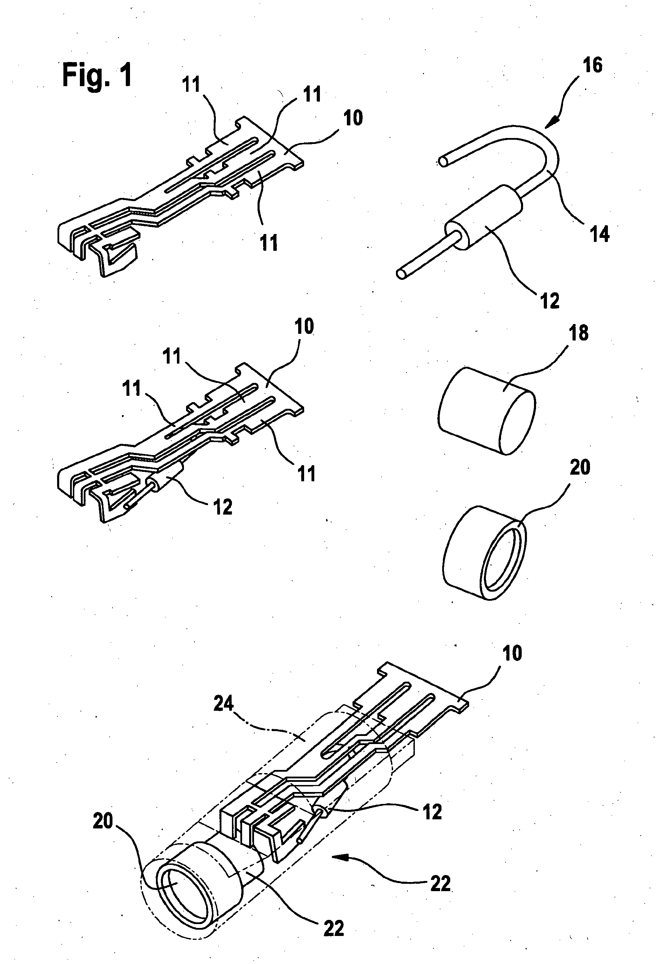

- Figur 1: eine perspektivische Darstellung der Komponenten des Grundmoduls und deren Anordnung im Grundmodul,
- Figur 2: weitere am Grundmodul anzubringende Komponenten,
- Figur 3: einen Schnitt durch das Gehäuse des das Grundmodul enthaltenden Bewegungssensors,
- Figur 4: einen Schnitt durch den Bewegungssensor und Grundmodul,
- Figur 5: zwei Ausführungsbeispiele unterschiedlicher Gehäuseausprägungen des Bewegungssensors.

Aus einem Stanzgitter 10 sind drei Stromschienen 11 gebildet, von denen zwei parallel zueinander in Längsrichtung verlaufen. Bei diesen beiden Stromschienen 11 wird durch deren S-förmigen Verlauf ein Querversatz erzielt. Die dritte Stromschiene 11 wird durch einen Widerstand 12 überbrückt, wobei der Widerstand 12 die beiden zueinander parallel verlaufenden Stromschienen 11 kreuzt. Der Widerstand 12 wird über Drähte 14 mit dem Stanzgitter 10 in der beschriebenen Weise verbunden, wobei auf der einen Seite des Widerstands 12 der Draht 14 mit einer Biegung 16 versehen ist. Der Biegewinkel ist größer als 90°, vorzugsweise 180°. Ein Grundmodul 22 eines Bewegungssensors 41 wird gebildet aus dem Stanzgitter 10 mit unmittelbar befestigten Widerstand 12, einem Magneten 18 sowie einer Kappe 20, die von einer im Wesentlichen zylinderförmigen Ummantelung 24 zumindest teilweise umgeben sind. Der Magnet 18 ist von einer Kappe 20 umschlossen und an dem einen Ende des Grundmoduls 22 angeordnet, während die Enden der drei Stromschienen 11 am anderen Ende des Grundmoduls 22 herausragen und in einer Anwendung nicht von der Ummantelung 24 umgeben sind.

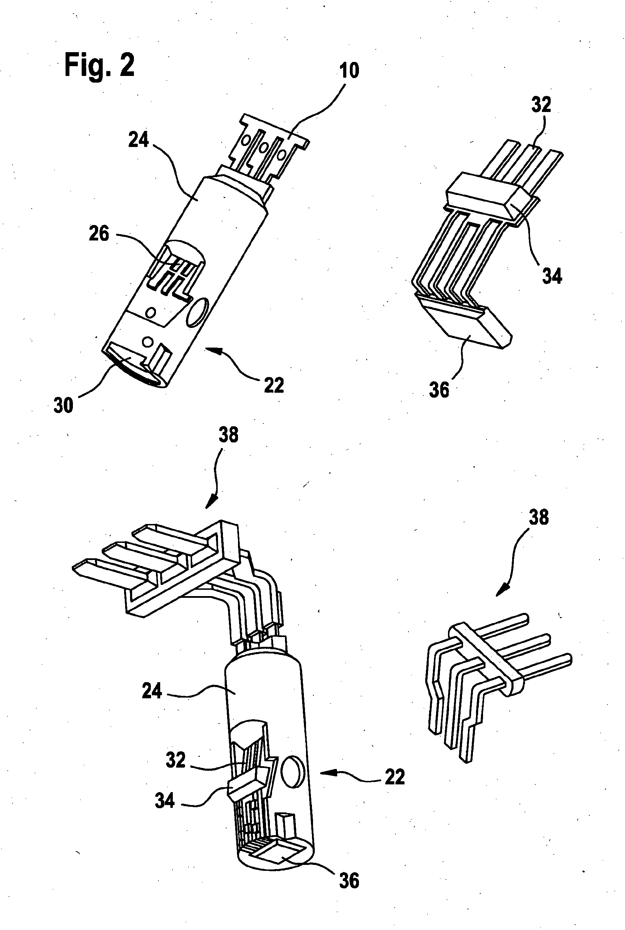

Wie aus Figur 2 ersichtlich weist die im Wesentlichen zylindrische Ummantelung 24 des Grundmoduls 22 eine keilförmige, in axialer Richtung verlaufende Ausnehmung 26 auf, so dass die anderen Enden der drei Stromschienen 11 von außen mit der integrierten Schaltung 36 kontaktierbar sind. Am Kopfende des Grundmoduls 22 ist eine radial orientierte Aussparung 30 vorgesehen, die von einem im Wesentlichen U-förmigen Rand umgeben ist. Ausnehmung 26 und Aussparung 30 dienen der platzsparenden mechanischen Aufnahme von auf Trägerstreifen 32 beziehungsweise Leadframes angebrachten integrierten Schaltung 36 und Kondensatoren 34. Die drei zum Anschluss von integrierter Schaltung 36 und Kondensatoren 34 dienenden Trägerstreifen 32 sind zweifach gebogen: nach Austritt aus der integrierten Schaltung 36 verlaufen sie um knapp 90° geknickt bis kurz vor den Kondensator 34, wo dann ein weiterer Knick um wenige Grad erfolgt. Zudem ist eine Stromschienenanordnung 38 vorgesehen, die aus nicht einzeln bezeichneten drei Stromschienen besteht, deren Abstände sich durch eine S-förmige Stufe der jeweils äußeren beiden Stromschienen verbreitern. Die Stromschienenanordnung 38 weist darüber hinaus einen 90°-Knick aus. Das Ende mit den geringeren Abständen der Stromschienen der Stromschienenanordnung 38 wird mit dem über die Ummantelung 24 hinausragenden Ende der Stromschienen 11 des Stanzgitters 10 kontaktiert. Die integrierte Schaltung 36 befindet sich im montierten Zustand in der Aussparung 30, während Kondensatoren 34 und Ende der Trägerstreifen 32 in der Ausnehmung 26 untergebracht sind. Die Trägerstreifen 32 befinden sich in elektrischem Kontakt mit den durch die Ausnehmung 26 freiliegenden Enden der Stromschienen 11 des Stanzgitters 10.

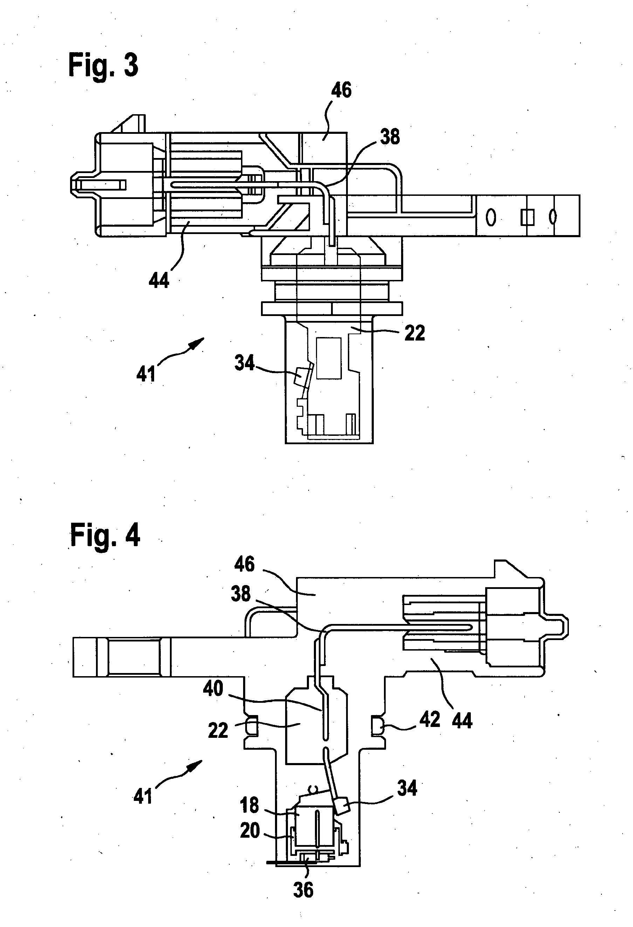

Gemäß Figur 3 wird das mit integrierter Schaltung 36, Kondensatoren 34, Trägerstreifen 32 und Stromschienenanordnung 38 bestückte Grundmodul 22 von einem Gehäuse 46 umgeben, das auf einer Seite in Form eines Steckers 44 ausläuft, über den die Stromschienen der Stromschienenanordnung 38 elektrisch zugänglich sind. Die entstandene Gesamtanordnung wird als Bewegungssensor 41 bezeichnet.

In Figur 4 ist eine Schnittdarstellung des Bewegungssensors 41 gezeigt, aus der sich die Anordnung der in den vorherigen Zeichnungen identisch bezifferten Komponenten entnehmen lässt. In einer umlaufenden Nut am Gehäuse 46 ist ein O-Ring 42 angeordnet.

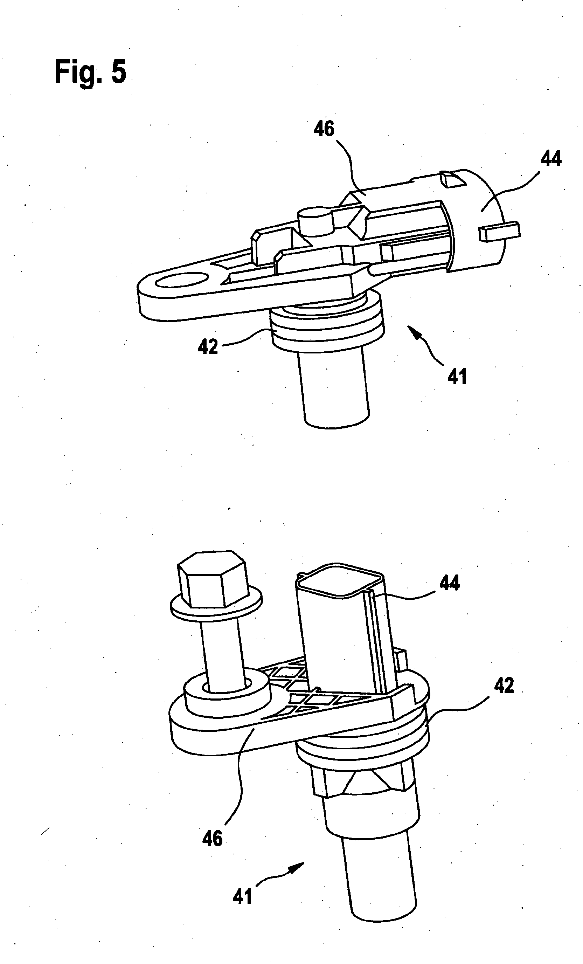

In der Figur 5 sind zwei mögliche Bauformen der Gehäuse 42 des Bewegungssensors 41 dargestellt. Die linke Bauform korrespondiert mit der der Figuren 3 und 4, während der Stecker 44 der rechten Bauform in Achsrichtung des Grundmoduls 22 orientiert ist, so dass in diesem Fall die Stromschienenanordnung 38 keinen 90°-Knick aufweist.

Das Grundmodul 22 ist Teil eines Bewegungssensors 41, der Bewegungen anhand einer Magnetfeldänderung detektiert. Die die Magnetfeldänderung sensierende integrierte Schaltung 36 ist beispielsweise in bekannter Weise mit wenigstens einem Hallelement als Beispiel für einen magnetfeldempfindlichen Sensor bestückt, welches auf das durch äußere ferromagnetische Teile veränderliche Magnetfeld des Magneten 18 mit einer veränderlichen Hallspannung reagiert. Bei einer möglichen Anwendung des Bewegungssensor 41 als Drehzahlsensor für die Raddrehung eines Kraftfahrzeuges ist das sensierende Ende des Bewegungssensors 41 einem als Zahnkranz ausgebildeten, sich mit dem Rad des Kraftfahrzeuges drehenden ferromagnetischen Teil benachbart, wobei das durch den Wechsel von Zähnen und Zahnlücken veränderliche Magnetfeld des Magneten 18 die Ausgangsspannung des Bewegungssensors 41 bestimmt. Der Magnet 18 ist hierbei Teil der Messwertgebervorrichtung. Diese kann jedoch auch durch ein äußeres magnetisches Impulsrad oder dergleichen angeregt werden, der Magnet 18 als Teil der Messwertgebervorrichtung entfällt dann.

Das Grundmodul 22 besteht aus dem Stanzgitter 10 (beispielsweise aus CuSn), an dem der Widerstand 12 als Beispiel für ein Beschaltungsmittel angeschweißt wird. Der Widerstand 12 ist einerseits Teil eines EMV-Netzwerks zur Reduzierung externer elektromagnetischer Störeinflüsse. Andererseits dient der Widerstand 12 der Anpassung an die jeweilige Versorgungsspannung. Bei einer 12V-Versorgungsspannung kommt beispielsweise ein 200 Ohm-Widerstand 12 zum Einsatz, bei einer Versorgungsspannung von 5V ein 52 Ohm-Widerstand. Somit gibt es unterschiedliche Grundmodule 22 für unterschiedliche Versorgungsspannungsniveaus. Der Widerstand 12 soll mit einer Ummantelung 24 umgeben werden, vorzugsweise mit einem Polyamid-Werkstoff umspritzt werden. Um die Robustheit insbesondere bei großen, häufigen Temperaturwechsel zu erhöhen, werden die den Widerstand 12 kontaktierenden Drähte 14 einerseits aus Stahl ausgeführt. Zudem wird der Draht 14 in eine besondere Form gebogen. Der Radius der Biegung 16 des Drahts 14 ist vorzugsweise größer als 2 mm, der Biegewinkel ist vorzugsweise größer als 90°. Der Widerstand 12 wird unmittelbar an das Stanzgitter 10 geschweißt und anschließend zusammen mit Magnet 18 und Kappe 20 in nur einem Arbeitsgang umspritzt, beispielsweise mit einem Polyamid-Werkstoff. Der Widerstand 12 erfüllt noch eine weitere Funktion, nämlich die Kreuzung der Stromschienen 11, um den Kundenwunsch einer bestimmten Steckerpinbelegung zu erfüllen. So ist beispielsweise der Masseanschluss der integrierten Schaltung 36 in der Mitte, der Anwender möchte jedoch den Massepin des Steckers 44 auf der Seite haben. Hierzu dient die spezielle S-Form der zwei Stromschienen 11 des Stanzgitters 10, die den notwendigen Querversatz der mittleren Stromschiene 11 in die äußere Position bzw. der äußeren Stromschiene in die mittlere Position bewirken. Der Widerstand 12 dient nun dazu, die zwei S-förmigen Stromschienen 11 zu kreuzen, um den rechten Anschluss der integrierten Schaltung 36 in elektrischen Kontakt mit der durch den Querversatz freiwerdenden linken Stromschiene 11 zu bringen.

Dieses Grundmodul 22 kann nun kundenspezifisch an die jeweiligen Anforderungen angepasst werden. Dies erfolgt einerseits durch die entsprechende Auswahl der funktionsspezifischen integrierten Schaltung 36, die dem jeweiligen Anwendungsgebiet (beispielsweise Drehzahlgeber, Phasengeber, Getriebesensor für einen digitalen Tachograph, Modulanwendungen in Zylinderkopfabdeckungen in einem Kraftfahrzeug, etc.) des Bewegungssensors 41 angepasst ist. Andererseits lassen sich unterschiedliche Einbauorte des Bewegungssensors 41 durch unterschiedliche Formen der Gehäuse 46 berücksichtigen wie beispielhaft in Figur 5 dargestellt. Zudem erfolgt die kundenspezifische Auswahl der gewünschten Stromschienenanordnung 38, mit der Steckerdesign und Gehäusegeometrie variiert werden können.

Der mechanische Aufbau von integrierter Schaltung 36, Trägerstreifen 32 (Leadframe) und Kondensatoren 34 wird jedoch beibehalten, damit die integrierte Schaltung 36 in die Ausnehmung 26, die Kondensatoren 34 und die Enden des Leadframes 32 in die Aussparung 30 gebracht werden können. Durch die zweimalige Biegung des Leadframes 32 wie eingangs beschrieben kann ein besonders kleines Grundmodul 22 mit geringem Durchmesser erreicht werden. Die auf dem Leadframe 32 der integrierten Schaltung 36 angebrachten Kondensatoren 34 nehmen so insgesamt einen kleinen Bauraum ein. Die Anschlüsse der integrierten Schaltung 36 sind durch Kondensatoren 38 überbrückt, welche eventuell über ein Anschlusskabel eindringende hochfrequente Störungen von der integrierten Schaltung 36 fernhalten.

Nachdem die funktionsspezifische integrierte Schaltung 36 über Kondensatoren 34 und Trägerstreifen 32 mit den Stromschienen 11 elektrisch kontaktiert wurde, wird das Grundmodul 22 mit der kundenspezifischen Stromschienenanordnung 38 versehen. Anschließend werden Grundmodul, integrierte Schaltung 34 (zumindest teilweise), Kondensatoren 34, Trägerstreifen 32 und Stromschienenanordnung 38 (zumindest teilweise) in einem Arbeitsgang mit einem Thermoplast umspritzt, das das Gehäuse 46 mit Stecker 44 des Bewegungssensors 41 bildet.

## Patentansprüche

1. Grundmodul für einen Bewegungssensor, insbesondere Drehzahlgeber, Phasengeber oder Getriebesensor für ein Kraftfahrzeug, wobei das Grundmodul (22) zumindest zwei Stromschienen (11) aufweist zur Kontaktierung einer integrierten Schaltung (36) zur Sensierung einer Bewegung, und zumindest ein Beschaltungsmittel (12, 14) umfasst, das an der Stromschienen (11) angeordnet ist, wobei die Stromschienen (11) und das Beschaltungsmittel (12) zumindest teilweise von einer Ummantelung (26) umgeben sind, wobei als Beschaltungsmittel zumindest ein elektrischer Widerstand (12) mit Drähten (14) vorgesehen ist, wobei dass der Draht (14) aus Stahl besteht und auf einer Seite des Widerstands (12) der Draht (14) mit einer Biegung (16), größer als 90°, versehen ist,
- wobei die die Ummantelung (26) zumindest eine Ausnehmung (26) aufweist zur Kontaktierung der zumindest zwei Stromschienen (11),
- sowie dass die Ummantelung (26) zumindest eine Aussparung (30) aufweist zur mechanischen Aufnahme der integrierten Schaltung (36).

2. Grundmodul für einen Bewegungssensor nach einem der vorhergehenden Ansprüche, **dadurch gekennzeichnet, dass** zumindest drei Stromschienen in dem Grundmodul (22) angeordnet sind, wobei durch die Beschaltungsmittel (12, 14) eine Kreuzung der Stromschienen (11) erfolgt.

3. Grundmodul für einen Bewegungssensor nach einem der vorhergehenden Ansprüche, **dadurch gekennzeichnet, dass** in dem Grundmodul (22) zumindest ein Magnet (18) sowie eine Kappe (20) von der Ummantelung (26) zumindest teilweise umgeben sind.

4. Grundmodul für einen Bewegungssensor nach einem der vorhergehenden Ansprüche, **dadurch gekennzeichnet, dass** die Ummantelung (26) aus einem thermoplastischen Werkstoff, vorzugsweise aus einem Polyamid-Werkstoff, ist.

5. Bewegungssensor mit einem Grundmodul nach einem der vorhergehenden Ansprüche, **dadurch gekennzeichnet, dass** das Grundmodul (22) von einem Gehäuse (46) zumindest teilweise umschlossen ist.

6. Bewegungssensor nach Anspruch 5, **dadurch gekennzeichnet, dass** in dem Gehäuse (46) weitere Stromschienen (38) angeordnet sind, die mit den zumindest zwei oder drei Stromschienen (11) kontaktierbar sind.

7. Bewegungssensor nach einem der Ansprüche 5 oder 6
**dadurch gekennzeichnet, dass** das Gehäuse (46) zumindest einen Stecker (44) umfasst.

8. Bewegungssensor nach Anspruch 5, **dadurch gekennzeichnet, dass** die integrierte Schaltung (36) auf einem Trägerstreifen (32) angeordnet ist, der vorzugsweise zweifach gebogen ist.

## Claims

1. Base module for a motion sensor, in particular rotational speed signal transmitter, phase signal transmitter or gearbox sensor for a motor vehicle, wherein the base module (22) has at least two bus bars (11) for making contact with an integrated circuit (36) for sensing a movement, and comprises at least one wiring means (12, 14) which is arranged on the bus bars (11), wherein the bus bars (11) and the wiring means (12) are surrounded at least partially by a casing (26), wherein at least one electrical resistor (12) with wires (14) is provided as the wiring means, wherein the wire (14) is composed of steel and on one side of the resistor (12) the wire (14) is provided with a bend (16) which is greater than 90°,
- wherein the casing (26) has at least one recess (26) for making contact with the at least two bus bars (11),
- wherein the casing (26) has at least one cutout (30) for mechanically accommodating the integrated circuit (36).

2. Base module for a motion sensor according to one of the preceding claims, **characterized in that** at least three bus bars are arranged in the base module (22), wherein a crossover of the bus bars (11) occurs using the wiring means (12, 14).

3. Base module for a motion sensor according to one of the preceding claims, **characterized in that** at least one magnet (18) and a cap (20) are at least partially surrounded by the casing (26) in the base module (22).

4. Base module for a motion sensor according to one of the preceding claims, **characterized in that** the casing (26) is formed from a thermoplastic material, preferably from a polyamide material.

5. Motion sensor having a base module according to one of the preceding claims, **characterized in that** the base module (22) is at least partially enclosed by a housing (46).

6. Motion sensor according to Claim 5, **characterized in that** further bus bars (38), which can be placed in contact with the at least two or three bus bars (11), are arranged in the housing (46).

7. Motion sensor according to one of Claims 5 and 6, **characterized in that** the housing (46) comprises at least one plug (44).

8. Motion sensor according to Claim 5, **characterized in that** the integrated circuit (36) is arranged on a carrier strip (32) which is preferably bent twice.

## Revendications

1. Module de base pour capteur de déplacement, en particulier pour capteur de vitesse de rotation, capteur de phase ou capteur de transmission pour véhicule automobile,
le module de base (22) présentant au moins deux rails de courant (11) qui assurent le contact avec un circuit intégré (36) qui capte un déplacement et au moins un moyen de circuit (12, 14) disposé sur les rails de courant (11),
les rails de courant (11) et le moyen de circuit (12) étant englobés au moins en partie par une enveloppe (26),
au moins une résistance électrique (12) dotée de fils (14) étant prévue comme moyen de circuit,
le fil (14) étant réalisé en acier et le fil (14) étant doté d'une courbe (16) supérieure à 90° sur un côté de la résistance (12),
l'enveloppe (26) présentant au moins une découpe (26) qui assure le contact avec les deux ou plusieurs rails de courant (11),
et l'enveloppe (26) présentant au moins une découpe (30) qui reprend mécaniquement le circuit intégré (36).

2. Module de base pour capteur de déplacement selon la revendication précédente, **caractérisé en ce qu'**au moins trois rails de courant sont placés dans le module de base (22), les moyens de circuit (12, 14) réalisant un croisement des rails de courant (11).

3. Module de base pour capteur de déplacement selon l'une des revendications précédentes, **caractérisé en ce qu'**au moins un aimant (18) ainsi qu'un capuchon (20) sont entourés au moins en partie par l'enveloppe (26) dans le module de base (22).

4. Module de base pour capteur de déplacement selon l'une des revendications précédentes, **caractérisé en ce que** l'enveloppe (26) est réalisée en un matériau thermoplastique, de préférence en un matériau à base de polyamide.

5. Capteur de déplacement doté d'un module de base selon l'une des revendications précédentes, **caractérisé en ce que** le module de base (22) est englobé au moins en partie par un boîtier (46).

6. Capteur de déplacement selon la revendication 5, **caractérisé en ce que** d'autres rails de courant (38) qui peuvent être mis en contact avec les deux ou trois rails de courant (11) sont disposés dans le boîtier (46).

7. Capteur de déplacement selon l'une des revendications 5 et 6, **caractérisé en ce que** le boîtier (46) comporte au moins une fiche (44).

8. Capteur de déplacement selon la revendication 5, **caractérisé en ce que** le circuit intégré (36) est disposé sur un ruban de support (32) qui est replié de préférence deux fois.
